Europäisches Patentamt

(19) European Patent Office

Office européen des brevets

(11) Publication number: **0 037 680**
**A1**

(12) # EUROPEAN PATENT APPLICATION

(21) Application number: **81301274.7**

(22) Date of filing: **25.03.81**

(51) Int. Cl.³: **G 02 F 1/29**
G 02 F 1/09, G 02 B 7/26

(30) Priority: **26.03.80 US 134048**

(43) Date of publication of application:
**14.10.81 Bulletin 81/41**

(84) Designated Contracting States:
**CH DE FR GB IT LI**

(71) Applicant: **SPERRY CORPORATION**
1290, Avenue of the Americas
New York, N.Y. 10019(US)

(72) Inventor: **Soref, Richard Allan**
45 Westgate Road
Newton Centre Massachusetts 02159(US)

(74) Representative: **Michaels, Peter Albert**
SPERRY UNIVAC Patent & Licensing Services M.S. S2
W1 SPERRY UNIVAC CENTRE
London NW10 8LS(GB)

(54) **Magneto-optic switch.**

(57) The invention provides a compact magneto-optic switch of reduced loss and reduced liability to cross-talk.

Light from an input fibre light guide (31) is collimated by a cylindrical rod lens (33), and diffracted by a magnetic stripe domain Faraday effect grating (43). After diffraction it is returned through a cylindrical rod lens to output light guides (30, 32). The grating may be used as a transmission grating with a separate cylindrical rod lens for the input and output sides, but preferably a mirror (46) is placed behind the grating and the light is reflected back through the same cylindrical rod lens (33) as served for the input.

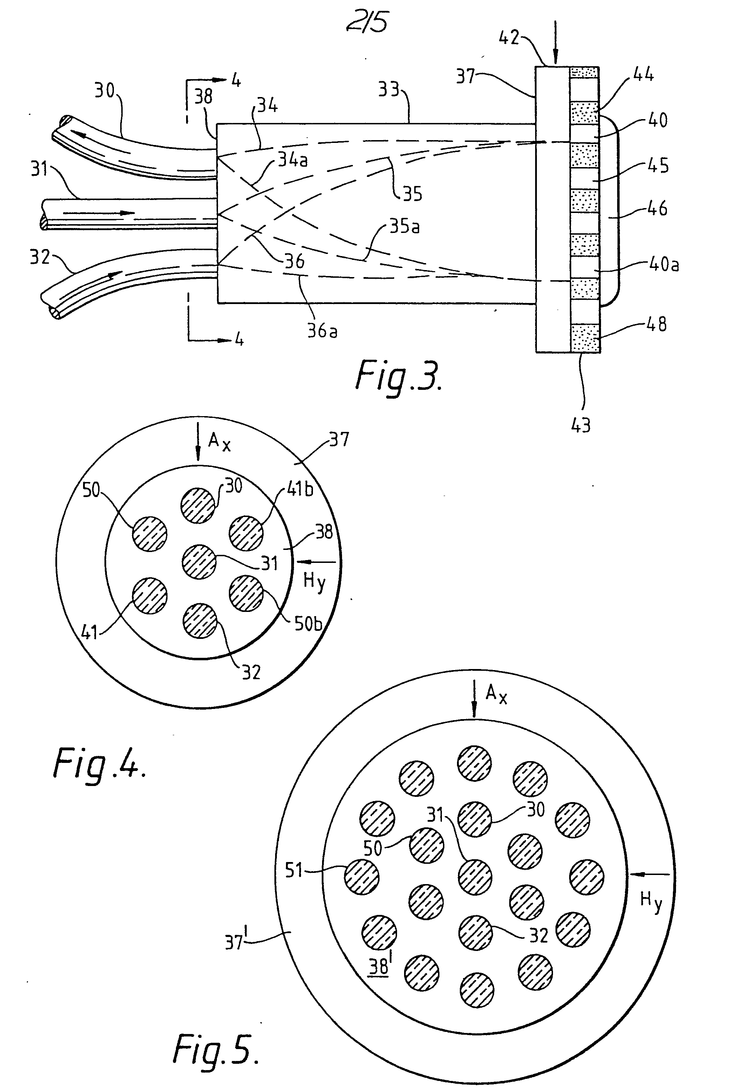

Pairs of output light guides may be arranged in a circle about the axis of the cylindrical rod lens, or in two or more concentric circles (Figs. 4 and 5).

Fig.3.

## Magneto-Optic Switch

The invention relates to magneto-optical switches. Such switches have applications, for example, in optical communication and data processing systems for switching, multiplexing, and demultiplexing optical data. The invention provides compact magneto-optical devices for providing rapid and reliable switching of unpolarised optical signals from one multimode optical fibre guide to any one of a plurality of multimode fibre guides.

Miniature devices are known that permit the transfer of optical power from a thin film structure to associated fibre transmission lines. In U.S. patent 4,082,424 (G.F. Sauter and G.F. Nelson), there is disclosed an integrated optical device including a diffraction grating construction consisting of a stripe domain garnet film in intimate contact with a suitable wave guide, both supported by a suitable substrate. A light beam directed incident to the surface of the stripe domain garnet film is selectively and varyingly coupled to the wave guide and is selectively and varyingly directed along the plane of the wave guide to a selected one of a plurality of output couplers for retransmission to an associated optical fibre transmission line. The magnetic film stripe domain diffraction grating and the method of the operation of U.S. patent 3 752 563 (E.J. Torok, D.S. Lo, and David I. Norman) are used as the means for coupling, switching, modulating, and multiplexing the light beam to and within the optical wave guide for subsequent processing of data borne by the light beam. In this apparatus, the light beam is limited to use with a single mode, single frequency light beam.

In U.S. patent 4,168,107 (G.F. Sauter), there is disclosed an improvement over such prior art in that the invention may use a multimode, multifrequency light beam for signal transmission whereby the design limitations of the apparatus are substantially reduced, resulting in a simplified optical switch or multiplexer of data-modulated light beams. That invention relates to an optical device using a diffraction grating as a means for switching, multiplexing, or demultiplexing a data-modulated multimode, multifrequency light beam. The diffraction grating consists of stripe domains established in a garnet film. A multimode, multifrequency data modulated light beam is directed normally incident to the first surface of the garnet film by an input optical fibre. By suitable magnetic fields in the plane of the garnet film, the stripe domain orientation is rotated. The rotated stripe domains, in turn, selectively and varyingly couple the first order diffracted light beam to selected first pairs of first order output optical fibre guides coupled to the second surface of the garnet film in a conical array. Reference may be had also the technical paper by T.R. Johansen, D.I. Norman, and E.J. Torok, entitled: "Variation of Stripe-Domain Spacing in a Faraday Effect Light Deflector", Journal of Applied Physics, Vol. 42, No. 1, page 1715, March 15, 1980 and U.S. patent 4,148,556 (G.F. Sauter and R.W. Honebrink).

The present invention provides a magneto-optic switch of lower loss and reduced liability to cross-talk by using a cylindrical rod lens to collimate the light from the input fibre before incidence on the grating, and to re-focus the light from the grating into the output fibre. Preferably only one such lens is used, and a mirror is provided behind the grating, so that the light traverses the lens and grating twice.

Figure 1 is a side view of a prior art magneto-optic switch.

Figure 2 is a graph useful in explaining the advantages of the present invention.

Figure 3 is a side view of one embodiment of the invention in partial cross-section.

Figures 4 and 5 are end views of two forms of the Figure 3 device taken along the line 4-4 of Figure 3.

-3-

Figures 6 and 7 show side views of magnetic field generator systems which may be used with the device of Figures 3, 4, and 5.

Figure 8 is a side view of a second embodiment of the invention in cross-section.

Figures 9, 10, and 11 are side views of further forms of magnetic field generator systems.

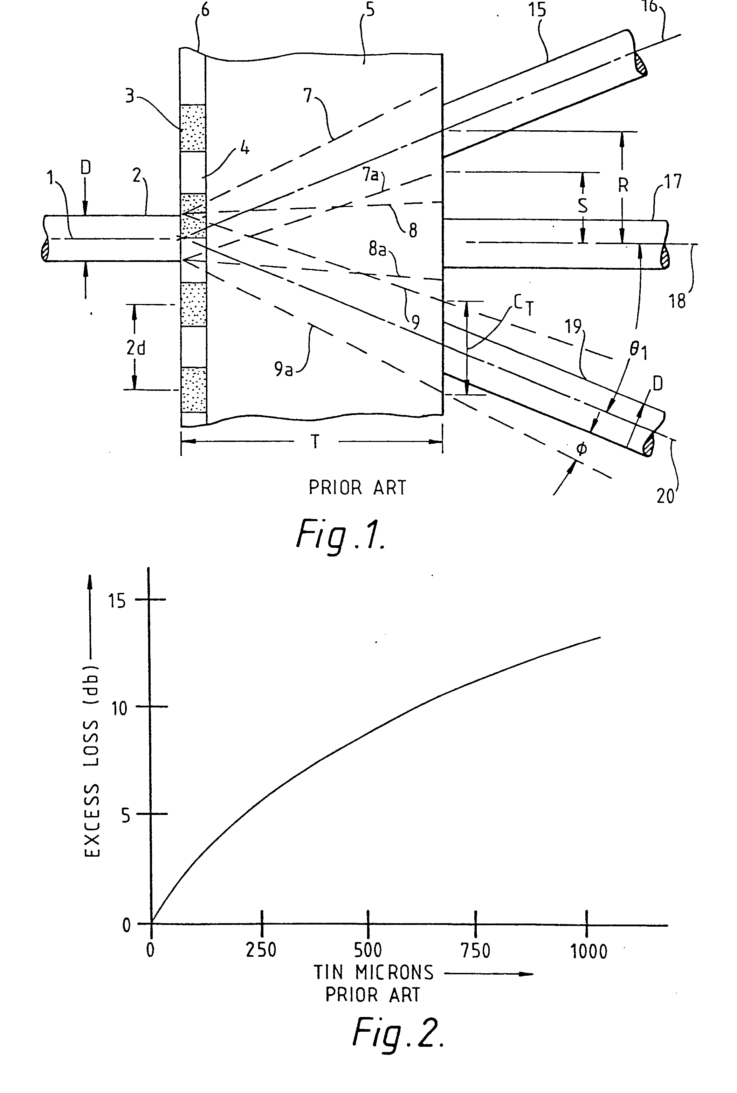

By way of explanation of the technological background, Figure 1 illustrates some features of the prior art. Referring to this Figure, a light switch includes a normally transparent magneto-optically sensitive thin film 6 disposed upon a transparent substrate 5. When subjected to a magnetic field component lying in the plane of film 6, a regular array of alternating stripe domains, 3 and 4, are formed, alternately of clockwise and counter-clockwise Faraday rotation. These constitute a regular optical grating, the parallel stripes having equal centre-to-centre displacements, d. A second material may be used for substrate 5, the magneto-optically active material of layer 6 being epitaxially disposed upon one surface thereof in the conventional manner. While a variety of magneto-optically active materials are available for the purpose, one suitable material is a substituted rare earth iron garnet of the formula $Bi_xYb_{3-x}Fe_5O_{12}$, where x falls in the range of 0.7 to 1.2.

The stripe domains form a phase grating, generally analogous in action to the action of the conventional fixed optical phase grating, but permitting an incident light beam to be variably deflected by an electrically controlled amount and in an electrically controlled direction. For example, light propagating in the multimode fibre optic wave guide 2 of Figure 1 may be caused by a magnetic field in the plane of film 6 to be first-order deflected through Faraday rotation along an axis 16 or 20 or along any of plural axes (not shown) extending above or below the plane of Figure 1, as described by Sauter et al.

Thus, in the far-field region, the light energy propagating in the fibre wave guide 2 has certain forbidden paths, and also permitted paths at particular angles $\theta_N$ given by the equation:

$$\sin \theta_N = N\lambda / 2d \qquad (1)$$

where N, the order of the permitted path, is an odd integer or zero. The stripe domain spacing d, and therefore the angle of diffraction $\theta_N$, are readily changed by applying a magnetic field component within the layer 6 parallel to the long dimension of the stripes. Further, the entire stripe domain pattern is readily rotated about the axis 1, 18 normal to the plane of the film 6 by rotating the magnetic field about that axis 1, 18. Accordingly, the prior art, as well as the present invention, provides an optical device for controllably diffracting a light beam incident at $90^{\circ}$ on the surface of an optically active film 6 and for rotating the stripe domains within film 6, thereby steering the selected diffracted light beam into a selected one of a plurality of output fibre wave guides coupled to the side of the substrate 5 opposite the film 6.

Still referring to Figure 1, light flowing in the input guide 2, butt-sealed at right angles to the face of the film 6, in the absence of a magnetic field in the film 6 flows directly across the substrate 5 into the central butt-sealed output guide 17. These two guides both lie opposite one another on the axis, 1, 18. Symmetrically disposed, angularly cut fibre guides 15, 19 with respective axes 16, 20 lie at equal angles $\theta_1$ to the axis 1, 18. Preferably, all the fibre optic guides have equal core diameters D, including those guides not shown in Figure 1 as they are not in the plane of the drawing.

The liquid-phase epitaxy film 6 is formed on an epitaxially compatible but magnetic field insensitive transparent substrate 5, preferably of gadolinium gallium garnet, though other materials may be used. Films 5 and 6 may have a total thickness T, and may be respectively 5 millimetres and 4 micro-metres thick, for example. The output guides 15, 19, et cetera, lie in a conical pattern symmetrically about the axis 1, 18. In Figure 1, the angle of diffraction $\theta_1$ is typically $15^{\circ}$.

In Figure 1, the zero order output beam passes along the axis 18 into the output fibre guide 17, while the several first order light beams pass into the output fibre guides 15, 19 along the axes 16, 20. The output optical fibres 15, 19 are aligned along the first order optical axes for maximum output efficiency. The grating 6 is so designed that $\theta_1$ is large enough to avoid overlapping of the zero and first order diffracted beams. Also, the diffracted light beams undergo some dispersion when passing through the substrate 5, forming expanding cones of light bounded substantially by the respective boundaries 7, 7a, and 9, 9a, which fact further controls the optimum value of angle $\theta_1$ by requiring an appropriate choice of the angular spacing between the boundaries 8a and 9, for example, to preclude excessive interplay between adjacent zero and first order or between first and second order diffracted light beams. Note that each beam, while within substrate 5, expands from an area related to the diameter D of the input fibre guide 2 and the numerical aperture of the guide 2, to an area related to the major axis dimension $C_T$ where the beam intercepts the opposite surface of the substrate 5. Thus, the axes of the output fibre guides 44, 44a, et cetera, are preferably equally spaced in the Figure 1 device along a particular ellipse on the exposed surface of substrate 5 and having a radius of major axis R whose centre lies on the primary axis 1, 18.

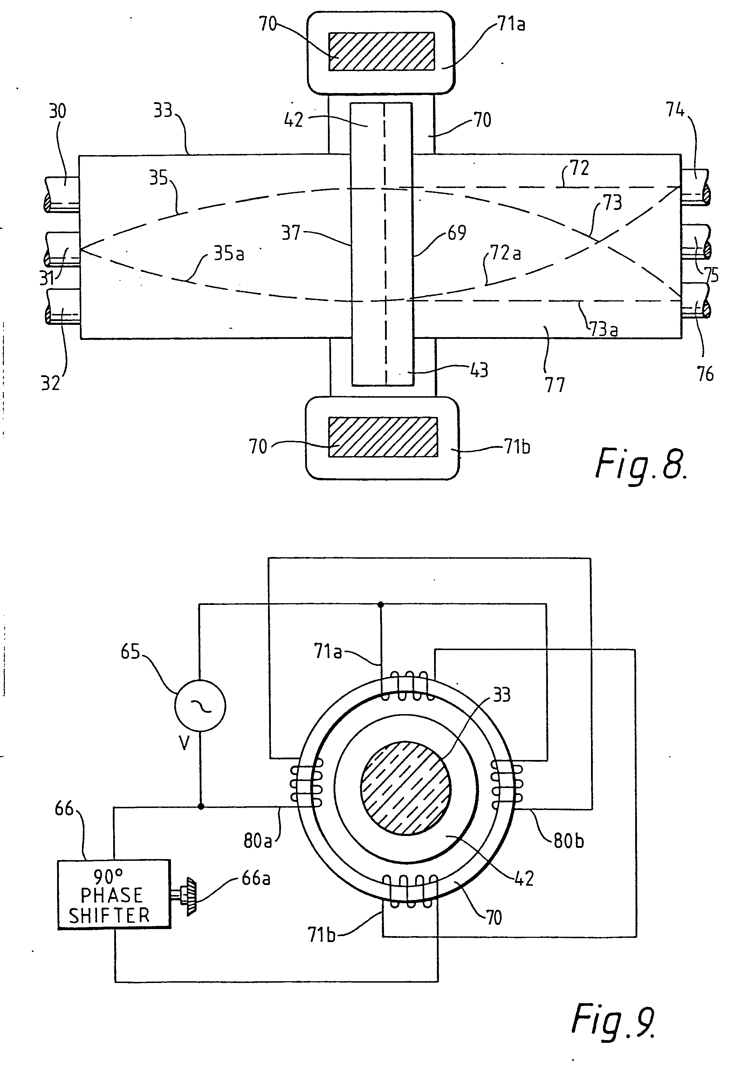

The present invention, the principal forms of which are shown in Figures 3 and 8, is designed to reduce further the optical insertion loss inherent in the known device and also to reduce optical cross-talk between the zero and first order beams, while at the same time permitting a more compact construction. Further, angularly cut fibre wave guides are avoided, since only fibres butt-sealed in the usual manner at $90^{\circ}$ to their axes are required. Though small numerical aperture and small core fibres may be used, large core, large numerical aperture cores are preferably and advantageously employed.

Returning to Figure 1, loss and cross-talk readily arise in such devices and seriously limit the scope of design choices that may be exercised. The major losses stem from spreading losses over and above those brought about in the first order diffraction process. In Figure 1, it is seen that the first order beam between boundaries 9, 9a is determined at the active film 6 by the diameter D of the guide 2 and its numerical aperture. But, as directed along axis 20 toward output fibre guide 19, the beam significantly expands to an area related to the major axis dimension $C_T$ at the opposite surface of the substrate 5. Thus, a major portion of the first order diffracted light beam does not intercept the output guide 19 but may be scattered. The fraction tf transmitted into the output guide 19 is roughly proportional to the area of the abutted end of guide 2 to the total area of the light cone at the input end of the guide 19, or to $D^2/C_T^2$. Here:

$$C_T = D + \frac{2S}{\cos \theta_o} \tan \phi \qquad (2)$$

But:

$$\tan \phi \approx \frac{N.A.}{n_s} \qquad (3)$$

where N.A. is the fibre numerical aperture and $n_s$ is the substrate refractive index, so that the transmitted fraction tf becomes:

$$tf = \frac{D^2}{\left[D + \frac{2S}{\cos \theta_o} \left(\frac{N.A.}{n_s}\right)\right]^2} \qquad (4)$$

and so that the excess loss $L_E$ in dB. is:

$$L_E = -10 \log \frac{D^2}{\left[D + \frac{2S}{\cos \theta_o} \left(\frac{N.A.}{n_s}\right)\right]^2} \qquad (5)$$

Excess loss is defined as the optical insertion loss of the device in excess of the insertion loss of an ideal switch for which the substrate thickness T is zero. Consider, by way of example, a Figure 1 device constructed of a readily available low cost, graded index, wide band fibre guide with D = 63 micro-metres, N.A. = 0.21, $\theta_1$ = 15°, and $n_s$ = 2.0. Figure 2 illustrates the excess loss $L_E$ as a function of substrate film thickness T. It is seen that $L_E$ is 9 to 11 dB. for normally aceptable thicknesses T of 20 to 30 mils (500-750 micro-metres).

Further, it will be seen from Figure 1 that any overlap between the portion of the light cone 8, 8a actually entering the zero order guide 17 and the portion of the light cone 7, 7a or 9, 9a actually entering the first order guide 16 or 20 may cause serious cross-talk problems, as does any scattered light.

These problems are substantially reduced in the embodiment of the invention shown in Figures 3 and 4. The device shown employs an input fibre optic guide 31 butt-sealed in the usual manner at right angles to a first face 38 of a cylindrical rod lens 33. A pair of output fibre optic guides 30, 32, also butt-sealed at right angles to the face 38 are symmetrically placed with respect to the input guide 31. The input role of the guide 31 may readily be interchanged with the output roles of the guides 30, 32.

An essential feature of the device is a circular cylindrical or rod lens 33, which acts either as a collimating or a decollimating lens, depending on the direction of the light passing through the lens. Preferably, the lens 33 is a small glass rod achromatic lens with a parabolic radial distribution of refractive index, increasing radially from its optical axis and with a very short focal length, whereby a real image may be formed at one end surface of the lens. Such achromatic lenses for collimating or decollimating purposes, particularly designed for use with optical fibre light guides, are widely described in the literature, including European patent application no. 80300480.3 (Sperry Corporation) and U.S. patent 3,894,789 (Kobayashi et al.) The selected lens preferably has three features for use in the present invention: the lens length is a fourth of the wave guide pitch at the centre operating wave length so as to image the fibre core source at infinity, the lens numerical aperture is greater than the core numerical aperture, and the lens outside diameter exceeds the fibre cladding diameter. Also of interest are the arrangements of U.S. patent 4,119,362 (Holzman) and of the paper "Microlenses for Coupling Junction Lasers to Optical Fibers", Applied Optics, January 1974, page 89 et seq. by L.G. Cohen et al. Other conventional devices may be employed. Suitable devices may be purchased under the trade name Selfoc from the Nippon Sheet Glass Company, 3 New England Executive Park, Burlington, Massachusetts. A typical lens 33 is a 2 mm. diameter, wide angle Selfoc SLW lens with a numerical aperture of 0.50. The lens is 0.25 pitch at the optical communication wave length of interest, such as 0.85 microns, although it may be slightly less than 0.25 in pitch to compensate for the thickness of the gadolinium gallium garnet substrate 42.

At the interface 37 is a magnetic field insensitive substrate 37 similar to the substrate 5 of Figure 1. Reflections at this interface are avoided by using an optical index matching cement. An epitaxially-formed magneto-optically active film 43, similar to the film 6 of Figure 1, is formed on the substrate 42 opposite the face 37. On its surface 48 is deposited a highly reflective mirror 46 of gold or other such metal layer, or of a multilayer dielectric mirror assembly.

Light incoming within the fibre guide 31 is collimated into a parallel ray beam upon arrival at the reflecting interface 48, at which, in the absence of a magnetic field, it is reflected back within the same boundaries 35, 35a and is focussed back into the input fibre 31. In the presence of a magnetic field $H_x$, polarised as indicated in Figure 1, the collimated beam, upon arriving at the reflecting interface 48, is partly deflected by the grating of layer 43 downward by -1 first order diffraction, returning within the boundaries 36, 36a and entering the output fibre guide 32 as a decollimated or focussed light beam. At the same time, by +1 first order diffraction, an equal amount of light is deflected upward, where it is focussed by the lens into the core of the fibre guide 30. Thus, incoming light within the guide 31 makes a double pass through the substrate 42, through the active film 43, back through the active film 43, and finally through the substrate 42 into the lens 33. If deflected by the presence of a finite field $H_x$, it passes equally into output fibre guides 30 and 32; that is, the output fibres are addressed in pairs. In this operation, the achromatic lens 33 serves the dual purpose of collimating light from the input guide 31 and of decollimating or focussing reflected first-order light for collection by the guides 30 and 32 in the presence of a magnetic field $H_x$. Optical insertion loss and cross-talk are held low in this arrangement. By a proper choice of magnetic film thickness, the first order diffracted intensity can be optimised.

The output fibre guides 30 and 32 of Figure 3 are shown in end view in Figure 4 and are excited according to the orientation and magnitude of the magnetic field $\vec{H}$ where $\vec{H} = \vec{H}_x + \vec{H}_y$. If $H_x$ is set at zero and an appropriate finite horizontal magnetic field $H_y$ is substituted, the grating lines are rotated about the axis of the fibre guide 31 by 90°. To switch the incoming light beam into other directions, certain components of both $H_x$ and $H_y$ are present, and the input light may be deflected into the output guides 50 and 50b, for example. Other combinations or ratios of $H_x$ to $H_y$ will focus the input light beam into selected pairs of the ring of output guides, including the output guides 30, 32 or 50, 50b, et cetera, as will be further discussed, thereby accomplishing multi-pole switching. As shown in Figure 5, an additional ring or additional rings may be employed, concentric with the ring 30, 32, 50, 50b, 41, 41b, et cetera, and excitable by the use of a total magnetic field larger than that used for ring 30, 32 et cetera. By successive variations of the components $H_x$ and $H_y$, the incoming light beam may be selectively focussed on output fibre guide pairs of the outer ring of guide ends 51 et cetera. Thus, the grating array may be rotated continuously or according to any selected program to perform any predetermined order of paired excitations of fibre guide ends in one or either of the two concentric rings on the face 38'.

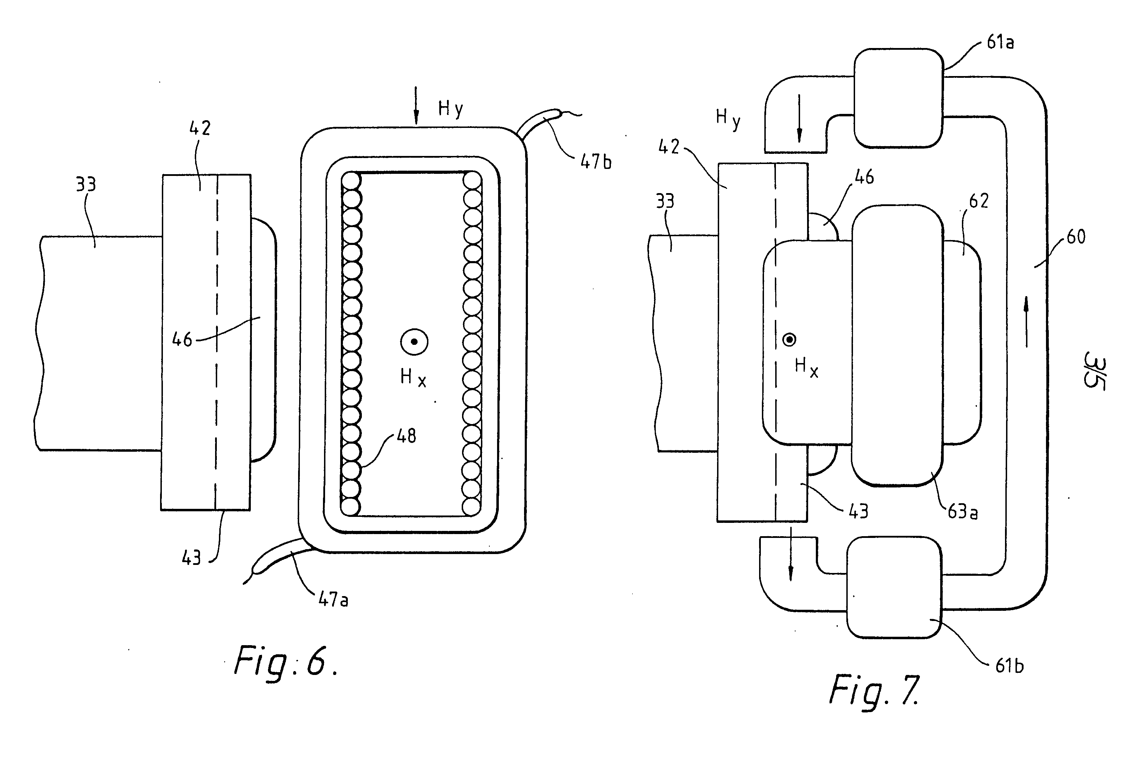

While the controllable $H_x$ and $H_y$ magnetic fields may be generated by cooperating pairs of cylindrical coils disposed like Helmholz coils, the embodiment is preferably supplied with coil arrangements permitting the apparatus to be constructed in even more compact fashion than in the aforementioned U.S. patent 3,752,563 (Torok et al), as in Figures 6 and 7. In Figure 6, the $H_y$ coil 48 consists of a multi-turn rectangular coil disposed symmetrically at the outer face of mirror 46, its axis and field $H_y$ intercepting the axis of lens 33 perpendicular thereto. Nested about coil 48 is a second similar multi-turn coil 47, its leads being indicated at 47a, 47b. The axis of coil 47 is coincident with the field $H_x$ direction and intercepts the axis of lens 33 at $90^o$. The fringing $H_x$ and $H_y$ components are arranged to thread through the active layer 43.

In Figure 7, the $H_y$ field is generated by controlled current flow through a pair of coils 61a, 61b inducing lines of flux flowing through a C-shaped ferrite yoke 60 which leap across small air gaps at opposed sides of the magneto-optically active film 43. The field $H_x$ oriented perpendicular to field $H_y$ is generated similarly, using a yoke 62 like the yoke 60 and a coil pair 63a, 63b disposed at right angles to the yoke 60. The magnetic field generation structure may be affixed to a support common to the apparatus of Figure 3.

In the embodiment of the invention seen in Figure 8, a versatile light transmission switch is shown, not employing reflection, but otherwise employing the principles of the reflection switch of Figure 3. Portions of the switch of Figure 8 to the left of the interface 69 are similar to those of Figure 3 and bear similar reference numerals, including the fibre optic guides 30, 31, 32, the lens 33, the substrate 42 affixed at the interface 37 to one end of the lens 33, and the magneto-optical film 43.

The mirror 46 of Figure 3 is replaced by an achromatic rod lens 77 which is a substantial duplicate of the achromatic lens 33 and which is affixed to the interface 69 by a transparent, optically matching adhesive. The end of the circular cylindric lens 77 opposite the interface 69 is supplied with three butt-sealed fibre optic guides 74, 75, 76, respectively aligned with the guides 30, 31, 32. While other electromagnet systems may be used, the embodiment will be discussed, in part, as if in operation with a magnetic field system like that of the aforementioned U.S. patent 3,752,563 (Torok et al) involving a generally circular yoke 70 excited by a first cooperating pair of coils 71a, 71b and second quadrature-disposed coils that are not seen in the Figure. It is understood that the magnetic field within the magneto-optically active film 43 is again a vectorial combination of $H_x$ and $H_y$ magnetic fields.

In operation, light entering the fibre guide 31 in Figure 8 is collimated by the achromatic lens 33 so that it flows between boundaries 35, 35a to form parallel rays at the active layer 43. Depending upon the magnitudes and polarity of the magnetic field at the layer 43, the input light energy will be focussed and deflected between the boundaries 72, 72a and 73, 73a into the output fibre guides 74 and 76. By adjustment of the magnetic field, the first order light is deflected to other fibre guide pairs in the concentric output array, giving multi-pole, transmissive optical switching. Reciprocally, a light beam entering the fibre guide 74 may be deflected partly into the guide 31; a beam entering the fibre guide 76 may similarly be deflected into the guide 31.

In Figure 8, only a limited number of fibre guides are shown, but the number of output fibres can be greatly increased, as desired. As in Figures 4 and 5, several concentric circles of fibre guides may be employed in the device of Figure 8. Again, addressing inner and outer circles of fibre guides may be accomplished by changing the x and y current magnitudes to change the magnitude of H as well as its angular orientation. It will be understood that full duplex transmission may readily be accomplished through the switch of Figure 8 with simultaneous upstream and downstream data flow and data multiplexing.

The optical switch of the present invention is also particularly adaptable for the regular continuous sampling of incoming light signals, as in Figure 9, for time division multiplexing. Here, the ferrite core 70 surrounding the active layer at the lens 33 has four paired coils 71a, 71b

-12-

and 80a, 80b spaced at 90° intervals. By adjusting the relative phases of the currents in the coils using the control 66a of a phase shifter 66, the in-plane magnetic field in the active layer may be oriented at any desired angle. Continuous field direction rotation may also be readily achieved. It will be understood that the field control arrangements of Figures 8 and 9 may also readily be applied to the reflective switch of Figure 3.

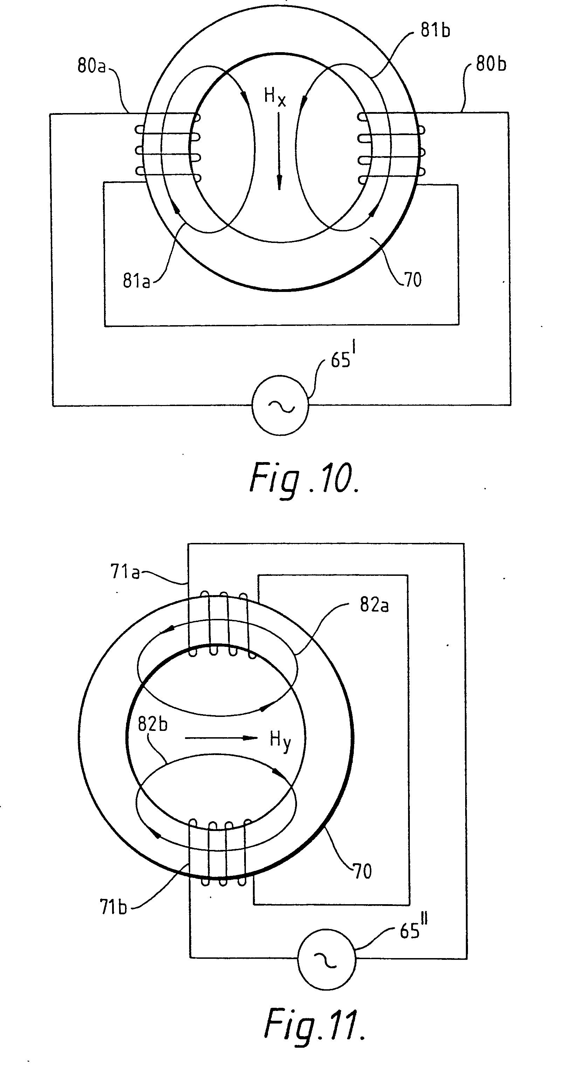

Figures 10 and 11 provide further explanation of the apparatus of Figure 9, in which the operation of the x and y coil pairs is separately considered. In Figure 10, the flux of the coil 80a opposes that of its partner coil 80b, so that flux must leave the ferrite core 70 and pass into the central region through the magneto-optically active layer. In a similar manner, the y field flux is driven into the same central region; in Figure 11, the flux of the coil 71a opposes that of its partner coil 71b, so that the magnetic flux must similarly leave the ferrite core 70 and also pass into the central region through the magneto-optically active layer. In the combined structure of Figure 9, the total field in the active layer is simply the vector sum of the component fields $H_x$ and $H_y$ of Figures 10 and 11. In addition to excitation by alternating or pulsed currents, stepped rotation of the control field may be obtained by adjusting the magnitudes of direct currents.

While the reflective and transmissive embodiments of Figures 3 and 8 have many common advantages over the prior art, the reflective device of Figure 3 has certain added advantages. First, it is easier to arrange for optimum diffraction. It is difficult to grow thick magneto-optically active films; since the film 43 of Figure 3 is used twice in the reflection process, it needs be only half as thick as the film 43 of Figure 8. Also, since the domain width is typically the same as the width of the magneto-optically active film, the diffraction angles for the reflective device are inherently twice those of the transmission device. Additionally, reflective embodiments of the invention permit achievement of larger diffraction angles than the transmissive embodiments and are more easy to mate with compact magnetic field generation structures.

## CLAIMS

1. A magneto-optic switch comprising a substrate (5) carrying an epitaxial magnetic stripe domain film (6), means (Fig. 10, 11) for applying an in-plane magnetic field to the film to form a stripe domain Faraday effect diffraction grating, and optic fibres optically coupled to the substrate to form an input light guide (31) for light incident on the grating, and output light guides (30, 32) for light diffracted by the grating, characterised in that the input (31) and output (30, 32) light guides are coupled to the substrate (6) through a cylindrical rod lens (33) of focal length such that the light is collimated before being incident on the grating, and is focused after diffraction by the grating into the output guides (30, 32).

2. A magneto-optic switch according to claim 1 using only one cylindrical rod lens (33), and in which a mirror (46) is positioned behind the grating (45) so that light traverses the grating and lens twice on passing from the input guide (31) to the output guides (30, 32).

3. A magneto-optic switch according to claim 1 or claim 2 having a plurality of pairs of output guides (30, 32; 41, 41b; 50, 50b), attached in a circle about the axis of the cylindrical rod lens.

4. A magneto-optic switch according to claim 3 having the output light guides attached in two or more concentric circles (30, 32, 50; 51) about the axis of the cylindrical rod lens (33).

0037680

1/5

PRIOR ART

Fig.1.

PRIOR ART

Fig.2.

Fig.3.

Fig.4.

Fig.5.

Fig. 6.

Fig. 7.

3/5

0037680

4/5

Fig.8.

90°
PHASE
SHIFTER

Fig.9.

5/5

Fig.10.

Fig.11.

**0037680**

European Patent
Office

**EUROPEAN SEARCH REPORT**

Application number

EP 81 30 1274

| | DOCUMENTS CONSIDERED TO BE RELEVANT | | | CLASSIFICATION OF THE APPLICATION (Int. Cl.³) |
|---|---|---|---|---|
| Category | Citation of document with indication, where appropriate, of relevant passages | | Relevant to claim | |
| | OPTICAL COMMUNICATION CONFERENCE 17-19 Septembre, 1979 Amsterdam, NL U. KILLAT et al.: "Binary phase gratings for use in fiber optic communication systems", pages 21.2-1 - 21.2-4<br><br>  * Page 21.2-1; figure 1 *<br><br>-- | | 1 | G 02 F 1/29<br>1/09<br>G 02 B 7/26 |
| | US - A - 4 111 524 (W.J. THOMLIN-SON)<br><br>  * Column 2, lines 41-52; figure 2 *<br><br>-- | | 1,2 | TECHNICAL FIELDS SEARCHED (Int. Cl.³) |
| D | US - A - 4 168 107 (G.F. SAUTER)<br><br>  * Figures 5 and 7 *<br><br>---- | | 1,3 | G 02 F 1/09<br>1/29<br>G 02 B 7/26 |
| | | | | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |
| | The present search report has been drawn up for all claims | | | |

| Place of search | Date of completion of the search | Examiner |
|---|---|---|
| The Hague | 13-07-1981 | BORMS |

EPO Form 1503.1  06.78